# EUROPÄISCHE PATENTSCHRIFT

(11) **EP 1 201 502 B1**
(45) Veröffentlichungstag und Bekanntmachung des Hinweises auf die Patenterteilung: **27.07.2005**
(21) Anmeldenummer: 01122425.0
(22) Anmeldetag: 20.09.2001
(51) Int. Cl.: B60R 5/00, B60R 5/04

(54) **Transportvorrichtung für langgestrecktes Ladegut im Innenraum eines Kraftfahrzeuges**
Transport device for elongated load inside a motor vehicle
Dispositif de transport pour des objets oblongs dans l'habitacle d'une véhicule à moteur

(30) Priorität: 28.10.2000 DE 10053617
(43) Veröffentlichungstag der Anmeldung: 02.05.2002
(73) Patentinhaber: BOS GmbH & Co. KG, 73760 Ostfildern (DE)
(72) Erfinder: Sitzler, Wolfgang, 42111 Wuppertal (DE)
(74) Vertreter: Patentanwälte Ostriga, Sonnet, Wirths & Roche

(56) Entgegenhaltungen:
- DE-C- 19 637 029
- US-A- 5 628 543
- PATENT ABSTRACTS OF JAPAN vol. 011, no. 021 (M-555), 21. Januar 1987 (1987-01-21) & JP 61 193949 A (HONDA MOTOR CO LTD), 28. August 1986 (1986-08-28)

## Beschreibung

Die Erfindung betrifft eine Transportvorrichtung entsprechend dem Oberbegriff des Anspruchs 1. Eine solche Transportvorrichtung ist durch die DE 44 38 909 C1 bekanntgeworden.

Derartige Transportvorrichtungen sind als Ausstattungsvorrichtungen an unterschiedlichen Einbaustellen eines Fahrzeug-Innenraums einsetzbar. Die verwendeten Behälter zur Aufnahme von langgestrecktem Ladegut, wie z.B. von Skiern, sind zumeist sackartig ausgebildet und aus einem widerstandsfähigen textilen Werkstoff gefertigt. Außerdem sind Behälter dieser Gattung bekanntgeworden, deren Stauvolumen von teleskopartig ineinanderschiebbaren bzw. ineinandergeschachtelten etwa ringlamellenartigen Einzelbauteilen bestehen.

Die Inbetriebnahme einer Transportvorrichtung gemäß der DE 44 38 909 C1 (s. dort Fig. 2), welche einen zu einem Behälter-Stauvolumen zusammenfaltbaren schlauch- bzw. sackartigen Behälter aufweist, geschieht beispielsweise wie folgt: Es wird zunächst ein vorderer Deckel geöffnet, welcher das den zusammengefalteten Behältersack aufnehmende hintere Rahmengehäuse freigibt. Sodann wird der Behältersack mittels des zugleich den Behältersackboden bildenden vorderen Deckels von Hand in seine ausgestreckte Lage versetzt und der vordere Deckel dabei lösbar arretiert. Die äußere Kontur des beladenen Behältersacks wird dabei hauptsächlich durch den vorderen Deckel, durch das den Durchladekanal umschließende hintere Rahmengehäuse sowie schließlich durch die Form des sich nach außen hin abbildenden Ladeguts bestimmt.

Einen ähnlichen Gegenstand wie die DE 44 38 909 C1 beschreiben die DE 39 01 354 C2 sowie die US 5 628 543 A. Im Unterschied zur DE 44 38 909 C1 offenbart die US 5 628 543 A keinen Behältersack mit einer undefiniert zusammenfaltbaren Sackwand sondern vielmehr einen Behältersack mit einer besonders leicht zusammenschiebbaren faltenbalg- bzw. ziehharmonikaförmigen Sackwand.

Ausgehend von einer Transportvorrichtung gemäß der DE 44 38 909 C1, liegt der Erfindung die Aufgabe zugrunde, die Bedienbarkeit einer solchen Transportvorrichtung zu vereinfachen.

In Verbindung mit den Merkmalen des Oberbegriffs des Anspruchs 1 wird entsprechend der Erfindung diese Aufgabe dadurch gelöst, dass dem Behälter mindestens ein Federelement zugeordnet ist, welches, ausgehend von einer vorgespannten Position, bei einer Entspannungsbewegung den Behälter auf mindestens einem Teil seiner Behälterlänge in eine ausgestreckte Position hinein versetzt.

Entsprechend der Erfindung greift das mindestens eine vorgespannte Federelement am Behälter an und versetzt diesen in seine ausgestreckte Position, sobald dem Federelement der Entspannungsweg freigegeben wird.

Das Federelement kann im wesentlichen unmittelbar bzw. unmittelbar oder aber unter Zwischenschaltung mindestens eines Betätigungselements am Behälter angreifen.

Eine kompakte Bauweise wird erfindungsgemäß dadurch erzielt, dass sich das Federelement mindestens mittelbar an einem von dem Rahmengehäuse oder an einem am Rahmengehäuse gehaltenen Deckel gebildeten Widerlager abstützt.

Auch für das Betätigungselement sieht die Erfindung vor, dass letzteres mindestens mittelbar am Rahmengehäuse oder an einem am Rahmengehäuse gehaltenen Deckel abgestützt oder gelagert sein kann.

Während beim Bekannten, zumindest was schlauch- oder sackartige Behälter anlangt, deren äußere Form durch das sich nach außen hin abbildende Ladegut bestimmt ist, sieht die Erfindung in weiterer Ausgestaltung vor, das Federelement und/oder das Betätigungselement so auszubilden, dass der ausgestreckte Behälter nicht nur etwa flach in seiner Länge ausgezogen, sondern vielmehr in einer dreidimensionalen Form gehalten wird, wodurch das Ladegut ohne jegliche Behinderung in den freien Innenraum des Behälters eingelegt werden kann.

Eine bevorzugte Ausführungsform entsprechend der Erfindung besteht darin, dass das Federelement eine im zusammengeschobenen Zustand potentielle Energie speichernde wendelförmige Feder ist.

Damit die wendelförmige Feder in ihrem gespannten Zustand nach Möglichkeit nur wenig Raum benötigt, besteht eine erfindungsgemäße Ausführungsform darin, dass die entspannte wendelförmige Feder zur Verringerung des Stauvolumens eine sich in Ausstreckrichtung des Behälters konisch verjüngende Gestalt aufweist.

Besondere erfindungsgemäße Ausführungsformen bestehen darin, die wendelförmige Feder gewissermaßen in den Behälter hinein zu integrieren. In diesem Zusammenhang besteht eine erfindungsgemäße Ausführungsform darin, dass die wendelförmige Feder den aus einzelnen etwa teleskopartig ineinanderschiebbaren starren bis flexiblen Elementen gebildeten kanalartigen Behälter oder den aus einem im wesentlichen biegeschlaffen flächenhaften Werkstoff gebildeten etwa schlauch- oder sackartigen Behälter umgibt.

In diesem Zusammenhang besteht eine alternative Ausgestaltung der Erfindung darin, dass der aus einzelnen teleskopartig ineinanderschiebbaren starren bis flexiblen Elementen gebildete kanalartige Behälter oder der aus einem im wesentlichen biegeschlaffen flächenhaften Werkstoff gebildete etwa schlauch- oder sackartige Behälter die wendelförmige Feder umgibt.

Von der DE 36 02 298 C2 ist es bekannt, gattungsgemäße Behälter nach Art eines Faltenbalges auszubilden. Zu seiner Betätigung sind dem faltenbalgartigen Behälter ober- und unterseitig Teleskopführungen zugeordnet, die von Hand oder elektromechanisch bewegt werden können.

Eine Bewegungskupplung zwischen der wendelförmigen Feder und dem Behälter kann allgemein derart beschaffen sein, dass der Behälter Schlaufen aufweist, welche, über die Länge der wendelförmigen Feder verteilt, an letzterer angreifen.

Im Zusammenhang mit einem aus einem im wesentlichen biegeschlaffen flächenhaften Werkstoff gebildeten etwa schlauch- oder sackartigen Behälter schlägt die Erfindung zur Bewegungskupplung zwischen der wendelförmigen Feder und dem Behälter vor, an der Innen- oder an der Außenfläche des Behälters zur Aufnahme der wendelförmigen Feder einen wendelförmigen Kanal vorzusehen.

Die Querschnittskontur der wendelförmigen Feder, welche zweckmäßig zugleich die Querschnittskontur des Behälters bestimmt, ist in weiterer Ausgestaltung der Erfindung etwa kreisförmig, oval oder polygonförmig, insbesondere rechteckig oder quadratisch.

Zur Schaffung einer mittelbaren Verbindung des mindestens einen Federelements mit dem Behälter sieht die Erfindung außerdem vor, dass das von dem sich entspannenden Federelement antreibbare Betätigungselement mindestens zugfest mit dem aus einzelnen etwa teleskopartig ineinanderschiebbaren starren bis flexiblen Elementen gebildeten kanalartigen Behälter oder mit dem aus einem im wesentlichen biegeschlaffen Werkstoff gebildeten schlauch- oder sackartigen Behälter verbunden ist.

Das Betätigungselement kann dabei entlang einer Kurve, insbesondere entlang eines Kreises oder entlang einer Geraden, antreibbar sein.

Als zweckmäßige Ausführungsform für die Gestaltung des Betätigungselements sieht die Erfindung vor, dass das Betätigungselement einen den Behälter umgebenden oder einen vom Behälter umgebenen Betätigungsbügel bildet, dessen Kontur der Querschnittskontur des dreidimensional ausgebreiteten Behälters angepasst ist.

Entsprechend einer erfindungsgemäßen Variante kann der Betätigungsbügel so ausgebildet sein, dass letzterer mit einem Bügelsteg am Rahmengehäuse oder an dem am Rahmengehäuse gehaltenen Deckel an einer Schwenklagerstelle gelagert und der andere gegenüberliegende Bügelsteg unter der Wirkung des sich entspannenden Federelements in Ausstreckrichtung des Behälters vom Rahmengehäuse wegschwenkbar ist.

Ohne dass einer bestimmten Ausbildung des am Betätigungsbügel angreifenden Federelements der Vorzug gegeben werden soll, sieht die Erfindung als vorteilhafte Ausführungsform vor, dass das Federelement von mindestens einer einenends zwischen den beiden Bügelstegen an einem Bügelschenkel des Betätigungsbügels und anderenends am Rahmengehäuse oder am Deckel angelenkten Gasfeder gebildet ist.

Eine andere vorteilhafte erfindungsgemäße Ausbildung des Federelements besteht darin, dass koaxial zur Schwenklagerstelle des einen Bügelsteges mindestens eine am Betätigungsbügel angreifende Dreh- oder Schenkelfeder angeordnet ist.

Zur Bewegungskupplung des Betätigungsbügels mit dem Behälter sieht die Erfindung vor, dass der von einem im wesentlichen biegeschlaffen flächenhaften Werkstoff gebildete schlauch- oder sackartige Behälter zumindest an einigen über die Länge des Betätigungsbügels verteilten Umfangsstellen mit letzterem verbunden ist.

Eine Stabilisierung des in seiner ausgestreckten Position befindlichen Behälters wird erfindungsgemäß dadurch erzielt, dass der Betätigungsbügel bei ausgestreckter Position des Behälters lösbar arretiert ist.

Vorteilhaft ist es in diesem Zusammenhang, wenn die lösbare Arretierung von mindestens einem die Bewegung des Betätigungsbügels vom Rahmengehäuse weg begrenzenden Anschlag gebildet ist. Dabei drückt das Federelement den Betätigungsbügel vom Rahmengehäuse weg gegen den Anschlag.

Entsprechend einer anderen erfindungsgemäßen Ausführungsform ist der Betätigungsbügel in seiner Ausgangslage bei vorgespanntem Federelement gesondert lösbar zu arretieren.

Grundsätzlich ist es auch möglich, auf eine gesonderte lösbare Arretierung des vorgespannten Federelements zu verzichten, wenn ein das Rahmengehäuse verschließender Deckel zugleich den mit einem vorgespannten Federelement versehenen Behälter in dessen verstauter Position sichert.

Für den Fall, dass der Weg des sich entspannenden Federelements oder der Weg des Betätigungsbügel weg vom Rahmengehäuse nicht ausreichen sollte, den Behälter auf dessen gesamter Länge auszustrecken, sieht die Erfindung vor, dass der mit einer Teillänge ausgestreckte Behälter in seinem bezüglich der Ausstreckrichtung vorderen, z.B. vor dem Betätigungsbügel angeordneten, Bereich ein lösbar zu arretierendes zusätzliches Behälter-Stauvolumen bildet.

Das zusätzliche Behälter-Stauvolumen kann mittels eines Verbindungselemente aufweisenden mehrteiligen Gurtes arretierbar sein. Dabei ist es zweckmäßig, dass Gurtenden des mehrteiligen Gurtes über Flächenreißverschluß-Elemente oder auch über Stecker-Rastelemente lösbar miteinander zu verbinden sind.

Eine besonders vorteilhafte Ausführungsform, das zusätzliche Behälter-Stauvolumen bereitzustellen, besteht darin, das zusätzliche Behälter-Stauvolumen von einem zusätzlichen Behälterteil mit den Merkmalen der Ansprüche 7 bis 14 zu bilden. Wie vorerwähnt, betreffen die Ansprüche 7 bis 14 hauptsächlich eine mit dem Behälter weitestgehend integrierte wendelförmige Feder.

Außerdem sieht die Erfindung vor, die ausgestreckte Lage des Behälters durch lösbare Arretierungsmittel zu sichern, was grundsätzlich von der DE 44 38 909 C1 bekannt ist.

Die lösbaren Arretierungsmittel können in weiterer Ausgestaltung der Erfindung von mindestens einem einenends am Rahmengehäuse oder am Deckel und andernends am freien Ende des ausgestreckten Behälters angreifenden Zuggurtes gebildet sein.

Außerdem sieht die Erfindung vor, dass das freie Ende des Behälters mit einer eine Stoßbelastung durch das Ladegut abfangende Verstärkung, wie mit einer Platte od. dgl., versehen ist, an welcher der Zuggurt angreift. Verstärkungen am freien Ende des Behälters sind durch die DE 44 38 909 C1 sowie durch die DE 34 47 323 C2 an sich bekannt.

Weitere Erfindungsmerkmale bestehen darin, dass in einem Bereich zwischen der Innenfläche des Deckels und dem aus einem im wesentlichen biegeschlaffen flächenhaften Werkstoff gebildeten schlauch- oder sackartigen Behälter zur Straffung der Behälterwand mindestens ein gummielastisches Zugelement verspannbar ist.

Damit das im Behälter aufgenommene Ladegut geordnet oder gebündelt bzw. verzurrt werden kann, oder damit z.B. ein innerhalb des Behälters angeordneter Betätigungsbügel aus seiner vorgespannten Position gelöst oder in letzterer gesichert werden kann, sieht die Erfindung vor, dass der Innenraum des schlauch- oder sackartigen Behälters über mindestens eine mittels eines Reißverschlusses od. dgl., verschließbare Bedienungsöffnung zugänglich ist.

In den Zeichnungen sind bevorzugte Ausführungsbeispiele entsprechend der Erfindung dargestellt, es zeigen
Fig. 1 eine schematische räumliche Darstellung einer hinter der Mittelarmlehne einer Fondsitzbank angeordneten Transportvorrichtung mit geöffnetem Deckel und mit einem in seiner verstauten Ausgangslage befindlichen Behälter,
Fig. 2 in Anlehnung an die Darstellung gemäß Fig. 1 den Behälter in einer teilweise ausgestreckten Position,
Fig. 3 und 4 in Anlehnung an die Darstellungen gemäß den Fig. 1 und 2, jedoch mit gänzlich ausgestreckten Behältern, zwei Ausführungsformen mit unterschiedlichen Behälterquerschnitten,
Fig. 5 in Anlehnung an die Darstellungen der Fig. 3 und 4 eine weitere Ausführungsform mit einem in seiner gänzlich ausgestreckten Lage befindlichen Behälter, der eine abgewandelte Querschnittsform aufweist und der zur Verdeutlichung einer wendelförmigen Feder zu einem Teil ausgeschnitten ist,
Fig. 6 in schematischer Darstellung ein zur Aufnahme eines schlauch- oder sackartigen Behälters bestimmtes Rahmengehäuse mit geöffnetem Deckel und mit einem sich in seiner vorgespannten Ausgangslage befindlichen Betätigungsbügel,
Fig. 7 die Anordnung gemäß Fig. 6 mit dem in seiner Wirkstellung befindlichen Betätigungsbügel,
Fig. 8 und 9 in Anlehnung an die Darstellung gemäß Fig. 7 jeweils eine vereinfachte Zeichnung mit ausgestrecktem schlauch- oder sackartigen Behälter und einem ein zusätzliches Stauvolumen bildenden zusätzlichen Behälterteil.

In den Zeichnungen ist jede Transportvorrichtung für langgestrecktes Ladegut, wie z.B. für Skier, unabhängig von ihrer individuellen Ausführungsform jeweils mit der Bezugsziffer 10 bezeichnet. Auch tragen vergleichbare Bauteile unterschiedlicher Ausführungsformen dieselben Bezugsziffern.

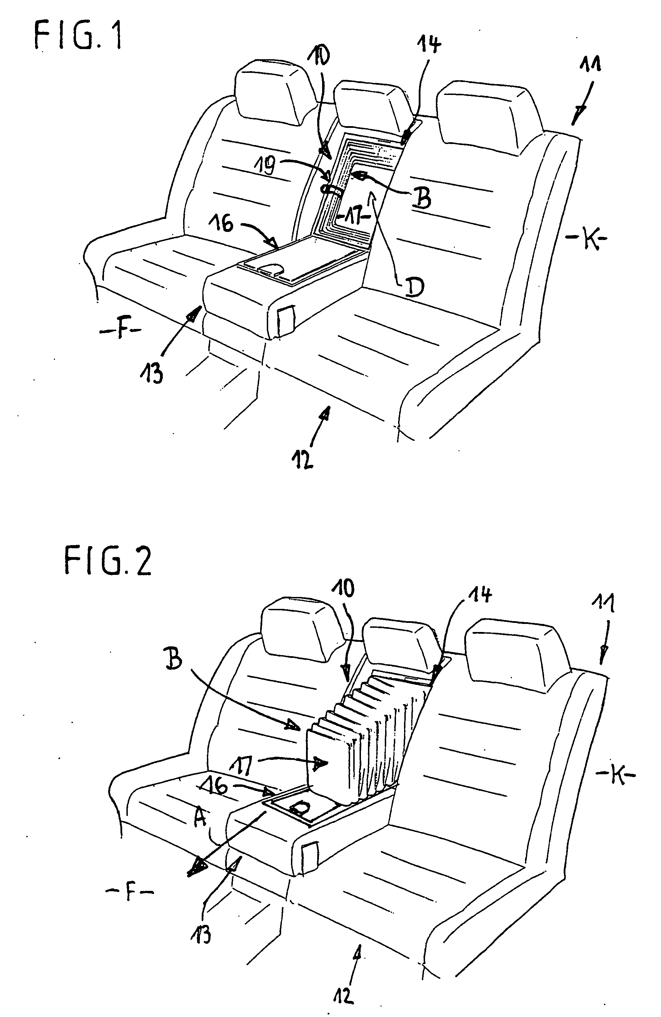

Fig. 1 zeigt, dass im mittleren Bereich einer Fondsitzlehne 11 einer Fondsitzbank 12 hinter einer herabgeklappten Mittelarmlehne 13 sich ein Einbauraum für die Transportvorrichtung 10 befindet.

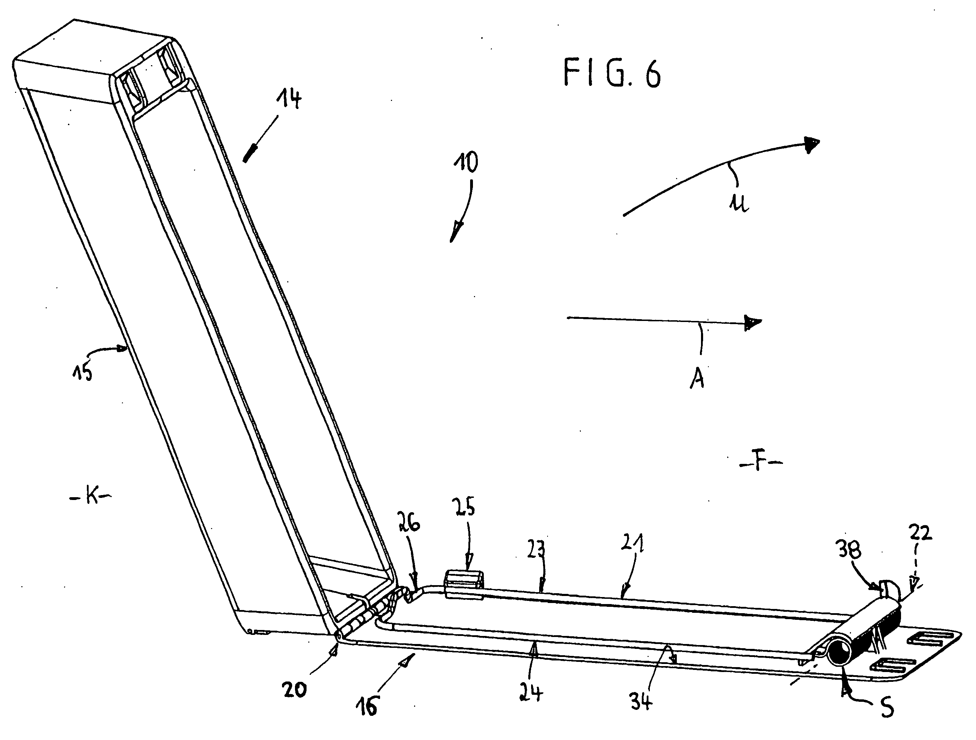

Die Transportvorrichtung 10 weist ein Rahmengehäuse 14 auf, welches einen Durchladekanal D umschließt, mittels welchem der Gepäckraum K und der Fahrgastraum F miteinander zu verbinden sind. Der Durchladekanal D ist zum Gepäckraum K hin mittels eines rückwärtigen Deckels 15 (vgl. Fig. 6-8) und zum Fahrgastraum F hin mittels eines vorderen Deckels 16 lösbar zu verschließen. Die Deckel 15, 16 sind jeweils um eine horizontale Achse herum schwenkbar.

Ein aus biegeschlaffem flächenhaftem textilem Werkstoff gebildeter sackartiger Behälter B ist in Fig. 2 in einer teilweise ausgestreckten Position gezeigt. Der Behälter B gemäß Fig. 2 weist eine etwa faltenbalgartige Form auf und ist zu seinem freien Ende hin mit einer stirnseitigen Verstärkung 17 versehen, welche in nicht dargestellter Weise eine Prallplatte enthält, die besonders bei einem Crashfall das in dem Behälter B befindliche langgestreckte Ladegut, beispielsweise Skier, abfangen soll.

Die faltenbalgartige Form des Behälters B gemäß Fig. 2 kommt dadurch zustande, dass sich in dem ausgestreckten Behälter B eine weitestgehend entspannte wendelförmige Feder mit rechteckiger Querschnittskontur befindet.

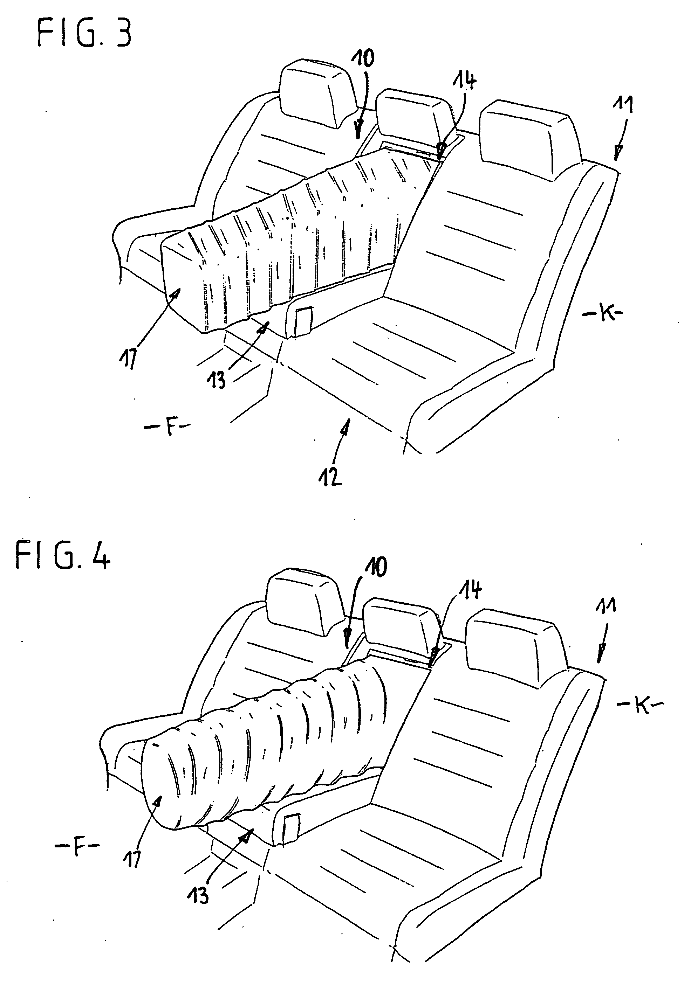

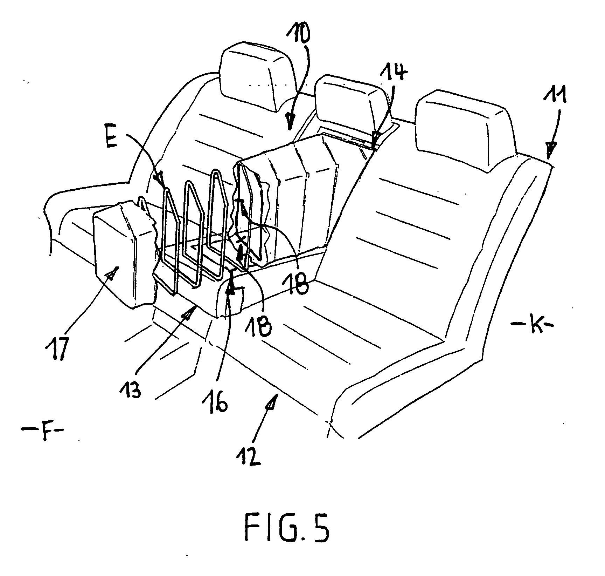

Diese wendelförmige Feder aus federelastischem Werkstoff, beispielsweise aus Federstahl, ist in Fig. 5 allerdings mit einem etwa trapezförmigen Querschnitt dargestellt, während die Querschnittsform der wendelförmigen Feder gemäß den Fig. 1 und 2 etwa quadratisch, gemäß Fig. 3 polygonal etwa nach Art eines Hausgiebels und gemäß Fig. 4 etwa kreisförmig bis oval ausgebildet ist.

Die wendelförmige Feder gemäß Fig. 5 ist mit dem Bezugsbuchstaben E versehen. Die wendelförmige Feder ist bei den Ausführungsformen entsprechend den Fig. 1-4 innerhalb des Behältersacks B angeordnet. Die Querschnittskontur der jeweiligen wendelförmigen Feder und die Querschnittskontur des jeweiligen Behältersacks B sind aneinander angepasst.

Damit die jeweils entspannte wendelförmige Feder das geringe Stauvolumen gemäß Fig. 1 einnehmen kann, weist die wendelförmige Feder eine sich in Ausstreckrichtung A des Behälters B konisch verjüngende Gestalt auf.

In Fig. 5 ist exemplarisch für die in den Fig. 1-5 gezeigten Ausführungsformen schematisch dargestellt, dass die vom Behältersack B umhüllte wendelförmige Feder E mittels Schlaufen 18 innen mit dem Behältersack B verbunden ist.

Ansonsten sind die in den Fig. 1-5 gezeigten Ausführungsformen der Transportvorrichtung 10 vom Grundprinzip her gleich ausgestaltet und unterscheiden sich - wie erwähnt - lediglich hinsichtlich der Querschnittskontur der jeweiligen wendelförmigen Feder und des korrespondierenden Behälters B.

Die Funktion der in den Fig. 1-5 gezeigten Transportvorrichtung 10 sei nun anhand der Fig. 1 und 2 exemplarisch wie folgt beschrieben:

Nachdem die Mittelarmlehne 13 und der vordere Deckel 16 heruntergeklappt wurden (Fig. 1), wird zunächst die bandförmige Haltelasche 19, welche beispielsweise vorn am rahmenartigen Gehäuse 14 festgehakt sein kann und welche die wendelförmige Feder gemeinsam mit dem zusammengestauten Behälter B in der vorgespannten Lage hält, gelöst. Dies hat zur Folge, dass sich die wendelförmige Feder entspannen und dabei den Behälter B in Ausstreckrichtung A bewegen kann. Die Federspannung der wendelförmigen Feder E sollte so bemessen sein, dass die Entspannung der wendelförmigen Feder nicht allzu schlagartig erfolgt.

Der Behälter B wird sich, was in Fig. 2 nicht dargestellt aber anhand der Fig. 3-5 vorstellbar ist, bei Entspannung der wendelförmige Feder - gegebenenfalls mit zusätzlicher Unterstützung von Hand - noch so weit nach vorn in Richtung A bewegen, bis etwa die aus den Fig. 3-5 ersichtliche Betriebslage erreicht ist. Wenn dies der Fall ist, kann der rückwärtige Deckel 15 (vgl. Fig. 6-8) geöffnet und das langgestreckte Ladegut, z.B. Skier, vom Gepäckraum K her in den ausgestreckten Behälter B hineingelegt werden.

Ein erneutes Verstauen des Behälters B erfolgt nach Entnahme des langgestreckten Ladeguts analog in umgekehrter Weise.

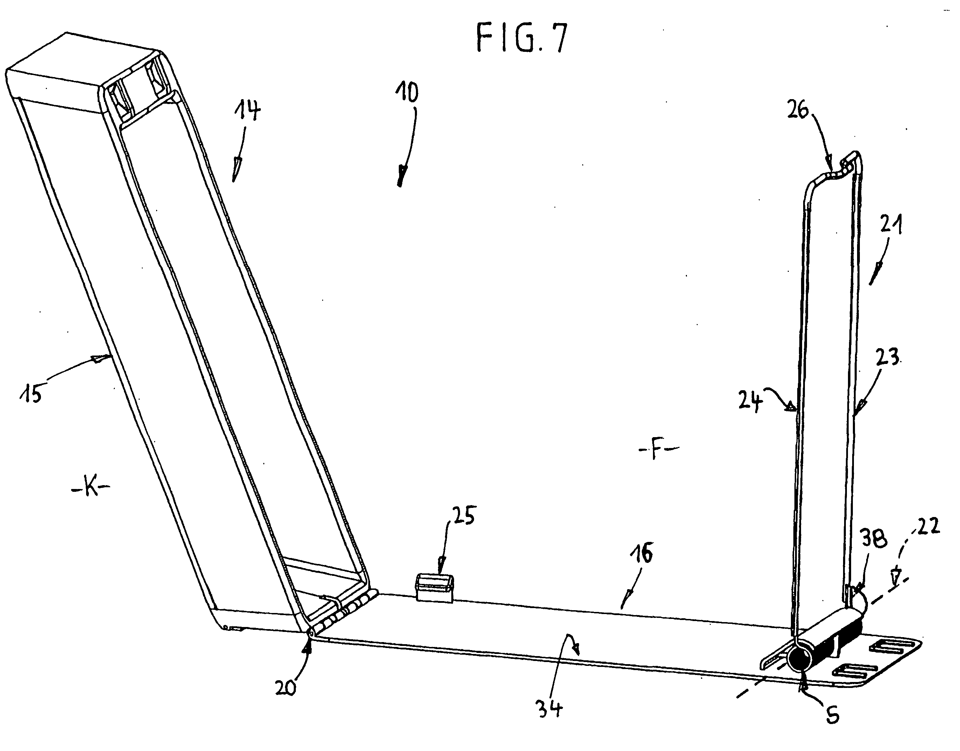

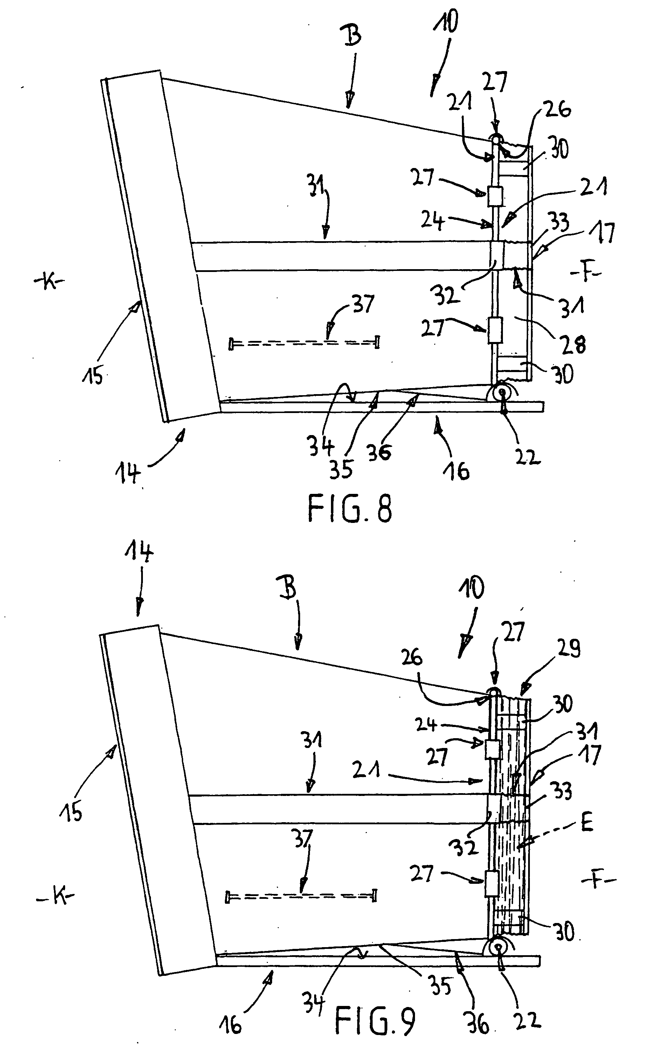

In den Fig. 6-9 ist die Transportvorrichtung 10 zwar ohne Bezug zu einem fahrzeugseitigen Einbaufeld dargestellt, jedoch kann man sich das fahrzeugseitige Einbaufeld anhand der Bezeichnungen K (Gepäckraum) und F (Fahrgastraum) ohne weiteres vorstellen. Zur verbesserten Darstellung der mechanischen Funktionsbauteile wurde in den Darstellungen gemäß den Fig. 6 und 7 der schlauch- oder sackartige Behälter B weggelassen und nur in den mehr schematischen Darstellungen gemäß den Fig. 8 und 9 gezeigt.

Der vordere Deckel 16 ist mittels einer unteren Schwenkachse 20 am rahmenartigen Gehäuse 14 klappbar angelenkt, welches der Aufnahme des zu einem Stauvolumen zusammengefalteten Behälters B dient.

Ein Betätigungsbügel 21 ist an einer Schwenklagerstelle 22 am freien Endbereich des Deckels 16 klappbar gelagert und mittels einer Schenkelfeder S etwa in Schwenkrichtung u rückstellbelastet. In Fig. 6 ist also die gespannte Ausgangsposition des Betätigungsbügels 21 gezeigt. In dieser gespannten Ausgangsposition ist einer der beiden Bügelschenkel 23, 24 des Betätigungsbügels 21, hier der Bügelschenkel 23, mittels einer am Deckel 16 befestigten Übergriffskralle 25 lösbar arretiert.

Am oberen Bügelsteg 26, am nicht gezeigten unteren Bügelsteg (bei der Schwenklagerstelle 22) sowie an den beiden Bügelschenkeln 23, 24 ist der aus textilem Werkstoff gefertigte Behälter B mittels angenähter oder angeschweißter Laschenbänder 27 (vgl. Fig. 8 und 9) bewegungsverbunden.

Der hintere offene Bereich des Behälters B ist in üblicher Weise innerhalb des rahmenartigen Gehäuses 14 rundum befestigt. Dabei umgreift der Betätigungsbügel 21 den schlauch- bzw. sackartigen Behälter B.

Die Funktionsweise der in den Fig. 6-9 gezeigten Transportvorrichtung ist folgende:

Zunächst wird der vordere Deckel 16 gelöst und nach unten geklappt (vgl. Fig. 6). Da der Behälter B vorn mit dem Betätigungsbügel 21 über die Laschenbänder 27 verbunden ist, wird mit dem Herunterklappen des Deckels 16 bereits ein Teil des eingefalteten Behälters B in Ausstreckrichtung A aus dem rahmenartigen Gehäuse 14 herausgezogen.

Sodann wird der Betätigungsbügel 21 mit seinem Bügelschenkel 23 seitlich aus der Übergriffskralle 25 herausbewegt, so dass sich die Schenkelfeder S entspannen und dabei den Betätigungsbügel 21 um die Schwenkachse 22 herum in Schwenkrichtung u nach vorn verschwenken kann.

Auf diese Weise nehmen entsprechend den Fig. 7-9 der Betätigungsbügel 21 seine aufrechte Position und der Behälter B seine ausgestreckte Lage ein. Die Schwenkbewegung des Betätigungsbügels 21 in Schwenkrichtung u ist durch am Deckel 16 raumfeste Anschläge 38 (nur einer ist gezeigt) begrenzt. Nach Öffnen des rückwärtigen Deckels 15 kann sodann das Ladegut vom Gepäckraum K her in den Behälter B eingelegt werden.

Nach Entnahme des Ladeguts erfolgt das Spannen des Betätigungsbügels 21 und das erneute Verstauen des Behälters B analog in umgekehrter Weise.

Damit gegebenenfalls eine zusätzliche Länge des Behälters B zur Verfügung gestellt werden kann, weist der ausgestreckte Behälter B in seinem bezüglich der Ausstreckrichtung A vorderen, vor dem Betätigungsbügel 21 angeordneten, Bereich (vgl. Fig. 8 und 9) ein lösbar zu arretierendes zusätzliches Behälter-Stauvolumen auf.

Dabei kann es sich gemäß Fig. 8 um ein zusammengefaltetes zusätzliches Behälterteil 28 oder gemäß Fig. 9 um ein zusammengestauchtes zusätzliches Behälterteil 29 handeln. Das zusätzliche Behälterteil 29 enthält eine gestrichelt angedeutete vorgespannte wendelförmige Feder E, welche mittels lösbarer Gurte 30 zusammen mit dem Behälterteil 29 in der gespannten Lage gehalten wird. Das zusätzliche Behälterteil 29 mit der wendelförmigen Feder E funktioniert entsprechend dem im Zusammenhang mit den Fig. 1-5 beschriebenen Prinzip.

Falls die zusätzlichen Behälterteile 28, 29 benutzt werden sollen, genügt es, die Gurte 30 zu lösen.

Aus den Fig. 8 und 9 ist weiterhin ersichtlich, dass an der stirnseitigen plattenartigen Verstärkung 17 und auch an dem Betätigungsbügel 21 vorn ein Zuggurt 31 an Befestigungsstellen 32, 33 formschlüssig befestigt ist. Es ist zweckmäßig, auch an der in den Fig. 8 und 9 nicht gezeigten abgewandten Längsseite des Behälters B einen zusätzlichen Zuggurt 31 anzuordnen.

Das hintere Ende des Zuggurtes 31 bzw. beider Zuggurte 31 ist am Rahmengehäuse 14 befestigt. Auf diese Weise können durch das Ladegut eingeleitete Stoßbelastungen sicher abgefangen werden.

In einem Bereich zwischen der Innenfläche 34 des Deckels 16 und dem schlauch- oder sackartigen Behälter B ist zur Straffung der unteren Behälterwand mindestens ein gummielastisches Zugelement 36 befestigt.

Der Innenraum des schlauch- oder sackartigen Behälters B ist über mindestens eine mittels eines Reißverschlusses 37 verschließbare Bedienungsöffnung zugänglich, damit das Ladegut gegebenenfalls geordnet, gebündelt und verzurrt werden kann.

## Patentansprüche

1. Transportvorrichtung (10) für Kraftfahrzeuge, wie z.B. für Limousinen, Kombinationskraftwagen oder Großraum-Personenkraftwagen, mit einem zu einem Stauvolumen verkleinerbaren, insbesondere zusammenschieb- oder - faltbaren, sackartigen od. dgl., Behälter (B) für langgestrecktes Ladegut, wie z.B. für Skier, und mit einem das Behälter-Stauvolumen mindestens teilweise aufnehmenden, einen Durchladekanal (D) umschließenden, fahrzeugseitig gehaltenen Rahmengehäuse (14), **dadurch gekennzeichnet, dass** dem Behälter (B) mindestens ein Federelement (E, S) zugeordnet ist, welches, ausgehend von einer vorgespannten Position, bei einer Entspannungsbewegung den Behälter (B) auf mindestens einem Teil seiner Behälterlänge in eine ausgestreckte Position hinein versetzt.

2. Transportvorrichtung nach Anspruch 1, **dadurch gekennzeichnet, dass** das Federelement (E) zumindest im wesentlichen unmittelbar am Behälter (B) angreift.

3. Transportvorrichtung nach Anspruch 1, **dadurch gekennzeichnet, dass** das Federelement (S) mittels mindestens eines Betätigungselements (21) am Behälter (B) angreift.

4. Transportvorrichtung nach einem der Ansprüche 1 bis 3, **dadurch gekennzeichnet, dass** sich das Federelement (E, S) mindestens mittelbar an einem von dem Rahmengehäuse (14) oder an einem am Rahmengehäuse (14) gehaltenen Deckel (16) gebildeten Widerlager abstützt.

5. Transportvorrichtung nach einem der Ansprüche 1 bis 4, **dadurch gekennzeichnet, dass** das Betätigungselement (21) mindestens mittelbar am Rahmengehäuse (14) oder an einem am Rahmengehäuse (14) gehaltenen Deckel (16) abgestützt oder gelagert ist.

6. Transportvorrichtung nach einem der Ansprüche 1 bis 5, **dadurch gekennzeichnet, dass** das Federelement (E, S) und/oder das Betätigungselement (21) den ausgestreckten Behälter (B) in einer dreidimensionalen Form halten.

7. Transportvorrichtung nach einem der Ansprüche 1 bis 6, **dadurch gekennzeichnet, dass** das Federelement eine im zusammengeschobenen Zustand potentielle Energie speichernde wendelförmige Feder (E) ist.

8. Transportvorrichtung nach Anspruch 7, **dadurch gekennzeichnet, dass** die entspannte wendelförmige Feder (E) zur Verringerung ihres Stauvolumens eine sich in Ausstreckrichtung (A) des Behälters (B) konisch verjüngende Gestalt aufweist.

9. Transportvorrichtung nach Anspruch 8, **dadurch gekennzeichnet, dass** die wendelförmige Feder (E) den aus einzelnen etwa teleskopartig ineinanderschiebbaren starren bis flexiblen Elementen gebildeten kanalartigen Behälter oder den aus einem im wesentlichen biegeschlaffen flächenhaften Werkstoff gebildeten etwa schlauch- oder sackartigen Behälter (B) umgibt.

10. Transportvorrichtung nach einem der Ansprüche 1 bis 8, **dadurch gekennzeichnet, dass** der aus einzelnen teleskopartig ineinanderschiebbaren starren bis flexiblen Elementen gebildete kanalartige Behälter oder der aus einem im wesentlichen biegeschlaffen flächenhaften Werkstoff gebildete etwa schlauch- oder sackartige Behälter (B) die wendelförmige Feder (E) umgibt.

11. Transportvorrichtung nach einem der Ansprüche 5 bis 10 **dadurch gekennzeichnet, dass** der Behälter Schlaufen (18) aufweist, welche, über die Länge der wendelförmigen Feder (E) verteilt, an letzterer angreifen.

12. Transportvorrichtung nach Anspruch 11, **dadurch gekennzeichnet, dass** der aus einem im wesentlichen biegeschlaffen flächenhaften Werkstoff gebildete etwa schlauch- oder sackartige Behälter (B) an seiner Innen- oder seiner Außenfläche zur Aufnahme der wendelförmigen Feder (E) einen wendelförmigen Kanal aufweist.

13. Transportvorrichtung nach einem der Ansprüche 7 bis 12, **dadurch gekennzeichnet, dass** die Querschnittskontur der wendelförmigen Feder (E) etwa kreisförmig, oval oder polygonförmig, insbesondere rechteckig oder quadratisch, ist.

14. Transportvorrichtung nach einem der Ansprüche 1 bis 8, **dadurch gekennzeichnet, dass** das von dem sich entspannenden Federelement (S) antreibbare Betätigungselement (21) mindestens zugfest mit dem aus einzelnen etwa teleskopartig ineinanderschiebbaren starren bis flexiblen Elementen gebildeten kanalartigen Behälter oder mit dem aus einem im wesentlichen biegeschlaffen Werkstoff gebildeten etwa schlauch- oder sackartigen Behälter (B) verbunden ist.

15. Transportvorrichtung nach Anspruch 14, **dadurch gekennzeichnet, dass** das Betätigungselement (21) entlang einer Kurve, insbesondere entlang eines Kreises oder entlang einer Geraden, antreibbar ist.

16. Transportvorrichtung nach Anspruch 14 oder nach Anspruch 15, **dadurch gekennzeichnet, dass** das Betätigungselement einen den Behälter (B) umgebenden oder einen vom Behälter (B) umgebenen Betätigungsbügel (21) bildet, dessen Kontur der Querschnittskontur des dreidimensional ausgebreiteten Behälters (21) angepasst ist.

17. Transportvorrichtung nach Anspruch 16, **dadurch gekennzeichnet, dass** der Betätigungsbügel (21) mit einem Bügelsteg (bei 22) am Rahmengehäuse (14) oder an dem am Rahmengehäuse (14) gehaltenen Deckel (16) an einer Schwenklagerstelle (22) gelagert und der andere gegenüberliegende Bügelsteg (26) unter der Wirkung des sich entspannenden Federelements (S) in Ausstreckrichtung (A) des Behälters (B) vom Rahmengehäuse (14) wegschwenkbar (Pfeil u) ist.

18. Transportvorrichtung nach Anspruch 17, **dadurch gekennzeichnet, dass** das Federelement von mindestens einer einenends zwischen den beiden Bügelstegen (bei 22, 26) an einem Bügelschenkel (23, 24) des Betätigungsbügels (21) und andernends am Rahmengehäuse (14) oder am Deckel (16) angelenkten Gasfeder gebildet ist.

19. Transportvorrichtung nach Anspruch 17, **dadurch gekennzeichnet, dass** koaxial zur Schwenklagerstelle (22) des einen Bügelsteges (bei 22) mindestens eine am Betätigungsbügel (21) angreifende Dreh- oder Schenkelfeder (S) angeordnet ist.

20. Transportvorrichtung nach einem der Ansprüche 16 bis 19, **dadurch gekennzeichnet, dass** der von einem im wesentlichen biegeschlaffen flächenhaften Werkstoff gebildete schlauch- oder sackartige Behälter (B) zumindest an einigen über die Länge des Betätigungsbügels (21) verteilten Umfangstellen (bei 27) mit letzterem verbunden ist.

21. Transportvorrichtung nach Anspruch 20, **dadurch gekennzeichnet, dass** der Betätigungsbügel (21) bei ausgestreckter Position des Behälters (B) lösbar arretiert ist.

22. Transportvorrichtung nach Anspruch 21, **dadurch gekennzeichnet, dass** die lösbare Arretierung von mindestens einem die Bewegung des Betätigungsbügels (21) vom Rahmengehäuse weg begrenzenden Anschlag (38) gebildet ist.

23. Transportvorrichtung nach einem der Ansprüche 16 bis 22, **dadurch gekennzeichnet, dass** der Betätigungsbügel (21) in seiner Ausgangslage bei vorgespanntem Federelement (S) gesondert lösbar zu arretieren ist.

24. Transportvorrichtung nach einem der Ansprüche 16 bis 23, **dadurch gekennzeichnet, dass** der mit einer Teillänge ausgestreckte Behälter (B) in seinem bezüglich der Ausstreckrichtung vorderen, z.B. vor dem Betätigungsbügel (21) angeordneten, Bereich ein lösbar zu arretierendes zusätzliches Behälter-Stauvolumen (28, 29) bildet.

25. Transportvorrichtung nach Anspruch 24, **dadurch gekennzeichnet, dass** das zusätzliche Behälter-Stauvolumen (28, 29) mittels eines Verbindungselemente aufweisenden mehrteiligen Gurtes (30) arretierbar ist.

26. Transportvorrichtung nach Anspruch 25, **dadurch gekennzeichnet, dass** Gurtenden des mehrteiligen Gurtes (30) über Flächenreißverschluß-Elemente oder über Stecker-Rastelemente lösbar miteinander zu verbinden sind.

27. Transportvorrichtung nach einem der Ansprüche 24 bis 26, **dadurch gekennzeichnet, dass** das zusätzliche Behälter-Stauvolumen von einem zusätzlichen Behälterteil (29) mit den Merkmalen der vorangehenden Ansprüche 7 bis 14 gebildet ist.

28. Transportvorrichtung nach einem der Ansprüche 1 bis 27, **dadurch gekennzeichnet, dass** die ausgestreckte Lage des Behälters (B) durch lösbare Arretierungsmittel (31) zu sichern ist.

29. Transportvorrichtung nach Anspruch 28, **dadurch gekennzeichnet, dass** die lösbaren Arretierungsmittel von mindestens einem einenends am Rahmengehäuse (14) oder am Deckel (16) und anderenends am freien Ende (bei 17) des ausgestreckten Behälters (B) angreifenden Zuggurt (31) gebildet sind.

30. Transportvorrichtung nach Anspruch 29, **dadurch gekennzeichnet, dass** das freie Ende des Behälters (B) mit einer eine Stoßbelastung durch das Ladegut abfangenden Verstärkung (17), wie Platte od. dgl., versehen ist, an welcher der Zuggurt (31) angreift (bei 33).

31. Transportvorrichtung nach einem der Ansprüche 9 bis 30, **dadurch gekennzeichnet, dass** in einem Bereich zwischen der Innenfläche (34) des Deckels (16) und dem aus einem im wesentlichen biegeschlaffen flächenhaften Werkstoff gebildeten schlauch- oder sackartigen Behälter (B) zur Straffung der Behälterwand (35) mindestens ein gummielastisches Zugelement (36) verspannbar ist.

32. Transportvorrichtung nach einem der Ansprüche 9 bis 31, **dadurch gekennzeichnet, dass** der Innenraum des schlauch- oder sackartigen Behälters (B) über mindestens eine mittels eines Reißverschlusses (37) od. dgl. verschließbare Bedienungsöffnung zugänglich ist.

## Claims

1. Transport apparatus (10) for motor vehicles, such as e.g. saloon cars, estate cars or people carriers, comprising a container (B) similar to a sack or the like for an elongate load such as e.g. skis, which container is reducible in size, in particular collapsible or foldable to a stowing volume, and comprising a vehicle-mounted frame-like housing (14), which at least partially receives the container stowing volume and surrounds a charging channel (D), **characterized in that** there is associated with the container (B) at least one spring element (E, S), which, starting from a preloaded position, during a relaxation movement displaces the container (B) along at least part of its container length into a spread-out position.

2. Transport apparatus according to claim 1, **characterized in that** the spring element (E) acts at least substantially directly upon the container (B).

3. Transport apparatus according to claim 1, **characterized in that** the spring element (S) acts by means of at least one actuating element (21) upon the container (B).

4. Transport apparatus according to one of claims 1 to 3, **characterized in that** the spring element (E, S) is supported at least indirectly against an abutment, which is formed by the frame-like housing (14) or on a cover (16) held on the frame-like housing (14).

5. Transport apparatus according to one of claims 1 to 4, **characterized in that** the actuating element (21) is supported or mounted at least indirectly on the frame-like housing (14) or an a cover (16) held on the frame-like housing (14).

6. Transport apparatus according to one of claims 1 to 5, **characterized in that** the spring element (E, S) and/or the actuating element (21) hold the spread-out container (B) in a three-dimensional shape.

7. Transport-apparatus according to one of claims 1 to 6, **characterized in that** the spring element is a helical spring (E), which in the compressed state stores potential energy.

8. Transport apparatus according to claim 7, **characterized in that** the relaxed helical spring (E) in order to reduce its stowing volume has a shape tapering in spreading direction (A) of the container (B).

9. Transport apparatus according to claim 8, **characterized in that** the helical spring (E) surrounds the channel-like container formed from individual, approximately telescopic, rigid to flexible elements or the approximately tube- or bag-like container (B) formed from a substantially floppy sheet material.

10. Transport apparatus according to one of claims 1 to 8, **characterized in that** the channel-like container formed from individual, telescopic, rigid to flexible elements or the approximately tube- or bag-like container (B) formed from a substantially floppy sheet material surrounds the helical spring (E).

11. Transport apparatus according to one of claims 5 to 10, **characterized in that** the container has loops (18), which are distributed over the length of the helical spring (E) and act upon the helical spring (E).

12. Transport apparatus according to claim 11, **characterized in that** the approximately tube- or bag-like container (B) formed from a substantially floppy sheet material has at its inner surface or its outer surface a helical channel for receiving the helical spring (E).

13. Transport apparatus according to one of claims 7 to 12, **characterized in that** the cross-sectional contour of the helical spring (E) is approximately circular, oval or polygonal, in particular rectangular or square.

14. Transport apparatus according to one of claims 1 to 8, **characterized in that** the actuating element (21), which is drivable by the relaxing spring element (S), is connected at least in a tension-resistant manner to the channel-like container formed from individual, approximately telescopic, rigid to flexible elements or to the approximately tube- or bag-like container (B) formed from a substantially floppy material.

15. Transport apparatus according to claim 14, **characterized in that** the actuating element (21) is drivable along a curve, in particular along a circle or along a straight line.

16. Transport apparatus according to claim 14 or according to claim 15, **characterized in that** the actuating element forms an actuating bow (21), which surrounds the container (B) or is surrounded by the container (B) and has a contour adapted to the cross-sectional contour of the three-dimensionally spread-out container (21).

17. Transport apparatus according to claim 16, **characterized in that** the actuating bow (21) is mounted by one bow web (at 22) at a pivot bearing point (22) on the frame-like housing (14) or on the cover (16) held on the frame-like housing (14) and the other opposite bow web (26) is pivotable under the action of the relaxing spring element (S) in spreading direction (A) of the container (B) away from the frame-like housing (14) (arrow u).

18. Transport apparatus according to claim 17, **characterized in that** the spring element is formed by at least one pneumatic spring, which is coupled at one end between the two bow webs (at 22, 26) to a bow limb (23, 24) of the actuating bow (21) and at the other end to the frame-like housing (14) or to the cover (16).

19. Transport apparatus according to claim 17, **characterized in that** at least one torsion- or leg spring (S), which acts on the actuating bow (21), is disposed coaxially with the pivot bearing point (22) of the one bow web (at 22).

20. Transport apparatus according to one of claims 16 to 19, **characterized in that** the tube- or bag-like container (B) formed from a substantially floppy sheet material is connected to the actuating bow (21) at at least several peripheral points distributed over the length of the actuating bow (21).

21. Transport apparatus according to claim 20, **characterized in that** the actuating bow (21) in the spread-out position of the container (B) is releasably locked.

22. Transport apparatus according to claim 21, **characterized in that** the releasable locking device is formed by at least one stop (38), which limits the movement of the actuating bow (21) away from the frame-like housing.

23. Transport apparatus according to one of claims 16 to 22, **characterized in that** the actuating bow (21) in its initial position in the preloaded state of the spring element (S) is separately releasably lockable.

24. Transport apparatus according to one of claims 16 to 23, **characterized in that** the container (B) spread out by a partial length forms, in its - in relation to the spreading direction - front region disposed e.g. in front of the actuating bow (21), a releasably lockable additional container stowing volume (28, 29).

25. Transport apparatus according to claim 24, **characterized in that** the additional container stowing volume (28, 29) is lockable by means of a multi-part belt (30) comprising connection elements.

26. Transport apparatus according to claim 25, **characterized in that** belt ends of the multi-part belt (30) are detachably connectable to one another by means of surface zip fastening elements or by means of connector detent elements.

27. Transport apparatus according to one of claims 24 to 26, **characterized in that** the additional container stowing volume is formed by an additional container part (29) having the features.of the preceding claims 7 to 14.

28. Transport apparatus according to one of claims 1 to 27, **characterized in that** the spread-out position of the container (B) is securable by means of releasable locking means (31).

29. Transport apparatus according to claim 28, **characterized in that** the releasable locking means are formed by at least one tension belt (31), which acts at one end upon the frame-like housing (14) or upon the cover (16) and at the other end upon the free end (at 17) of the spread-out container (B).

30. Transport apparatus according to claim 29, **characterized in that** the free end of the container (B) is provided with a reinforcement (17), such as a plate or the like, which absorbs an impact load caused by the loaded article and upon which the tension belt (31) acts (at 33).

31. Transport apparatus according to one of claims 9 to 30, **characterized in that** in a region between the inner surface (34) of the cover (16) and the tube- or bag-like container (B) formed from a substantially floppy sheet material at least one rubber-elastic tension element (36) is braceable for pulling the container wall (35) taut.

32. Transport apparatus according to one of claims 9 to 31, **characterized in that** the interior of the tube- or bag-like container (B) is accessible through at least one opening, which is closable by means of a zip fastener (37) or the like.

## Revendications

1. Dispositif de transport (10) pour des véhicules à moteur, tels que par exemple des limousines, des véhicules commerciaux ou des voitures personnelles de gros volume, avec un récipient (B) du genre d'un sac ou analogues, pouvant être rapetissé jusqu'à un volume de rangement, en particulier pouvant être rassemblé par regroupement ou pliage, pour un produit à charger oblong, tel que par exemple pour des skis, et avec un boîtier à cadre (14) maintenu côté véhicule, logeant au moins partiellement le volume de rangement du récipient et entourant un canal traversant de chargement (D), **caractérisé en ce qu'**au récipient (B) est associé au moins un élément élastique (E, S) qui, en partant d'une position prétendue, lors d'un déplacement de détente place le récipient (B), sur au moins une partie de sa longueur de récipient, en une position étirée.

2. Dispositif de transport selon la revendication 1, **caractérisé en ce que** l'élément élastique (E) agit pratiquement directement sur le récipient (B).

3. Dispositif de transport selon la revendication 1, **caractérisé en ce que** l'élément élastique (S) agit, à l'aide d'au moins un élément d'actionnement (21), sur le récipient (B).

4. Dispositif de transport selon l'une des revendications 1 à 3, **caractérisé en ce que** l'élément élastique (E, S) prend appui, au moins indirectement, sur un contre-appui formé par le boîtier à cadre (14), ou sur un couvercle (16) maintenu sur le boîtier à cadre (14).

5. Dispositif de transport selon l'une des revendications 1 à 4, **caractérisé en ce que** l'élément d'actionnement (21) est soutenu ou monté au moins indirectement sur le boîtier à cadre (14), ou sur un couvercle (16) maintenu sur le boîtier à cadre (14).

6. Dispositif de transport selon l'une des revendications 1 à 5, **caractérisé en ce que** l'élément élastique (E, S) et/ou l'élément d'actionnement (21) maintient/maintiennent le récipient (B) étendu en une forme tridimensionnelle.

7. Dispositif de transport selon l'une des revendications 1 à 6, **caractérisé en ce que** l'élément élastique est un ressort (E) en forme d'enroulement, stockant une énergie potentielle lorsqu'il est à l'état comprimé.

8. Dispositif de transport selon la revendication 7, **caractérisé en ce que** le ressort (E) en forme d'enroulement détendu présente une forme allant en s'effilant de façon conique dans la direction d'étendue (A) du récipient (B), afin de diminuer son volume de rangement.

9. Dispositif de transport selon la revendication 8, **caractérisé en ce que** le ressort (E) en forme d'enroulement entoure le récipient du genre d'un canal, formé de différents éléments rigides à flexibles, pouvant être imbriqués les uns dans les autres de façon télescopique, ou entoure le récipient (B), par exemple du genre d'un tuyau ou d'un sac, formé d'un matériau plat présentant une souplesse en flexion importante.

10. Dispositif de transport selon l'une des revendications 1 à 8, **caractérisé en ce que** le récipient du genre d'un canal, formé des différents éléments rigides à flexibles, pouvant être imbriqués les uns dans les autres de façon télescopique, ou le récipient (B) à peu près du genre d'un tuyau ou d'un sac formé d'un matériau plat, présentant une souplesse en flexion importante, entoure le ressort (E) du genre en forme d'enroulement.

11. Dispositif de transport selon l'une des revendications 5 à 10, **caractérisé en ce que** le récipient présente des boucles (18) qui, sur la longueur du ressort (E) en forme d'enroulement, agissent sur ce dernier de façon répartie.

12. Dispositif de transport selon la revendication 11, **caractérisé en ce que** le récipient (B), par exemple du genre d'un tuyau ou d'un sac, formé d'un matériau plat présentant une souplesse en flexion importante, présente, sur sa surface intérieure ou sa surface extérieure, un canal en forme d'enroulement pour loger le ressort (E) en forme d'enroulement.

13. Dispositif de transport selon l'une des revendications 7 à 12, **caractérisé en ce que** le contour de section transversale du ressort (E) en forme d'enroulement est à peu près circulaire, ovale ou polygonal, en particulier rectangulaire ou carré.

14. Dispositif de transport selon l'une des revendications 1 à 8, **caractérisé en ce que** l'élément d'actionnement (21), susceptible d'être entraîné par l'élément élastique (S) se détendant, est relié, au moins de façon résistante à la traction, au récipient du genre d'un canal, formé de différents éléments rigides et flexibles pouvant être imbriqués les uns dans les autres, par exemple de façon télescopique, ou est relié au récipient (B), par exemple du genre d'un tuyau ou d'un sac, formé du matériau présentant une souplesse de flexion importante.

15. Dispositif de transport selon la revendication 14, **caractérisé en ce que** l'élément d'actionnement (21) est susceptible d'être entraîné le long d'une courbe, en particulier le long d'un cercle ou le long d'une ligne droite.

16. Dispositif de transport selon la revendication 14 ou la revendication 15, **caractérisé en ce que** l'élément d'actionnement forme un étrier d'actionnement (21), entourant le récipient (B) ou entouré par le récipient (B), étrier dont le contour est adapté au contour de section transversale du récipient (21) à forme tridimensionnelle.

17. Dispositif de transport selon la revendication 16, **caractérisé en ce que** l'étrier d'actionnement (21) est monté sur un point servant de palier de pivotement (22), par une nervure d'étrier (en 22), sur le boîtier à cadre (14) ou sur le couvercle (16) maintenu sur le boîtier à cadre (14), et l'autre nervure d'étrier (26), opposée, est placée sous l'action de l'élément élastique (S) se détendant, en étant susceptible d'être écartée par pivotement (flèche u) du boîtier à cadre (14), dans la direction d'étendue (A) du récipient (B).

18. Dispositif de transport selon la revendication 17, **caractérisé en ce que** l'élément élastique est formé d'au moins un ressort à gaz, articulé, à une extrémité, entre les deux nervures d'étrier (en 22, 26), sur une branche d'étrier (23, 24) de l'étrier d'actionnement (21) et articulé, à l'autre extrémité, sur le boîtier à cadre (14), ou sur le couvercle (16).

19. Dispositif de transport selon la revendication 17, **caractérisé en ce qu'**au moins un ressort de rotation ou à branche (S), agissant sur l'étrier d'actionnement (21), est disposé coaxialement par rapport au point de palier de pivotement (22) d'une nervure d'étrier (en 22).

20. Dispositif de transport selon l'une des revendications 16 à 19, **caractérisé en ce que** le récipient (B) du genre d'un tuyau ou d'un sac, formé d'un matériau plat présentant une souplesse en flexion importante, au moins sur quelques points périphériques (en 27) répartis sur la longueur de l'étrier d'actionnement (21), est relié à ce dernier.

21. Dispositif de transport selon la revendication 20, **caractérisé en ce que** l'étrier d'actionnement (21) est bloqué de façon désolidarisable lorsque le récipient (B) est à la position étendue.

22. Dispositif de transport selon la revendication 21, **caractérisé en ce que** le blocage désolidarisable est formé par au moins une butée (38), délimitant, en s'en écartant, la course au déplacement de l'étrier d'actionnement (21) vis-à-vis du boîtier à cadre.

23. Dispositif de transport selon l'une des revendications 16 à 22, **caractérisé en ce que** l'étrier d'actionnement (21), lorsqu'il est à sa position initiale alors que l'élément élastique (S) est précontraint, doit être bloqué de façon désolidarisable et séparément.

24. Dispositif de transport selon l'une des revendications 16 à 23, **caractérisé en ce que** le récipient (B) étendu sur une longueur partielle forme, dans sa zone avant, par rapport à la direction d'étendue, par exemple la zone disposée devant l'étrier d'actionnement (21), un volume de rangement de récipient (28, 29) supplémentaire, devant être bloqué.

25. Dispositif de transport selon la revendication 24, **caractérisé en ce que** le volume de rangement de récipient (28, 29) supplémentaire peut être bloqué au moyen d'une courroie (30) en plusieurs parties, présentant des éléments de liaison.

26. Dispositif de transport selon la revendication 25, **caractérisé en ce que** des extrémités de la courroie (30) en plusieurs parties sont à relier ensemble de façon désolidarisable, par l'intermédiaire d'éléments de fermeture à glissière de surface, ou par l'intermédiaire d'éléments à encliquetage à éléments mâles.

27. Dispositif de transport selon l'une des revendications 24 à 26, **caractérisé en ce que** le volume de rangement de récipient supplémentaire est formé par une partie de récipient (29) supplémentaire, présentant les caractéristiques des revendications 7 à 14 précédentes.

28. Dispositif de transport selon l'une des revendications 1 à 27, **caractérisé en ce que** la position étendue du récipient (B) doit être assurée par des moyens de blocage (31) désolidarisables.

29. Dispositif de transport selon la revendication 28, **caractérisé en ce que** les moyens de blocage désolidarisables sont formés par au moins une sangle de traction (31), agissant, à une extrémité, sur le boîtier à cadre (14), ou sur le couvercle (16) et, à l'autre extrémité, sur l'extrémité libre (en 17) du récipient (B) étendu.

30. Dispositif de transport selon la revendication 29, **caractérisé en ce que** l'extrémité libre du récipient (B) est munie d'un renforcement (17), tel qu'une plaque ou analogues, supportant la sollicitation par les chocs, provoquée par le produit chargé, renforcement sur lequel la sangle de traction (31) agit (en 33).

31. Dispositif de transport selon l'une des revendications 9 à 30, **caractérisé en ce qu'**au moins un élément de traction (36), ayant l'élasticité du caoutchouc, peut être tendu dans une zone située entre la face intérieure (34) du couvercle (16) et le récipient du genre d'un tuyau ou d'un sac (B), formé à partir d'un matériau sensiblement souple en flexion, dans le but de tendre la paroi de récipient (35).

32. Dispositif de transport selon l'une des revendications 9 à 31, **caractérisé en ce que** l'espace intérieur du récipient (B), du genre d'un tuyau ou d'un sac, est accessible par l'intermédiaire d'au moins une ouverture de service, pouvant être refermée à l'aide d'une fermeture à glissière (37) ou analogue.
